(19) Europäisches Patentamt
European Patent Office
Office européen des brevets

(11) **EP 4 487 290 B1**

(12) **EUROPEAN PATENT SPECIFICATION**

(45) Date of publication and mention
of the grant of the patent:
**24.09.2025 Bulletin 2025/39**

(21) Application number: **23718084.9**

(22) Date of filing: **29.03.2023**

(51) International Patent Classification (IPC):
*G06T 5/20* (2006.01)          *G06T 5/70* (2024.01)

(52) Cooperative Patent Classification (CPC):
**G06T 5/70; G06T 5/20;** G06T 2207/10004;
G06T 2207/10048; G06T 2207/20032

(86) International application number:
**PCT/TR2023/050297**

(87) International publication number:
**WO 2023/191755 (05.10.2023 Gazette 2023/40)**

(54) **ES-HYBRID METHOD IN DAYTIME/THERMAL IMAGES**

ES-HYBRIDVERFAHREN BEI TAG-/THERMBILDERN

PROCÉDÉ HYBRIDE ES DANS DES IMAGES DIURNE/THERMIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **01.04.2022 TR 202205170**

(43) Date of publication of application:
**08.01.2025 Bulletin 2025/02**

(73) Proprietors:
• **Aselsan Elektronik Sanayi ve Ticaret Anonim
Sirketi**
**06200 Ankara (TR)**
• **Gazi Universitesi**
**06560 Yenimahalle/Ankara (TR)**

(72) Inventors:
• **BILGE, Hasan Şakir**
**Çankaya/Ankara (TR)**
• **ESER, Salih**
**Yenimahalle/Ankara (TR)**

• **ALAVANDA HOLAT, Elif**
**Altında /Ankara (TR)**

(74) Representative: **Yamankaradeniz, Kemal**
**Destek Patent Inc.**
**Maslak Mah.**
**Büyükdere Cad., No: 243**
**Kat: 13, Spine Tower, Sariyer**
**34485 Istanbul (TR)**

(56) References cited:
KR-B1- 102 214 669

• SUDHAKARAN ANJU ET AL: "High-Quality
Image Scaling Using V-Model", 2018
INTERNATIONAL CONFERENCE ON CIRCUITS
AND SYSTEMS IN DIGITAL ENTERPRISE
TECHNOLOGY (ICCSDET), IEEE, 21 December
2018 (2018-12-21), pages 1 - 4, XP033611033,
DOI: 10.1109/ICCSDET.2018.8821146

**EP 4 487 290 B1**

## Description

### Technical Field

The invention relates to the ES-Hybrid (Edge preserving sorting-hybrid) method in daytime/thermal images applied in real time on the FPGA to provide noise removal.

In particular, the invention relates to the ES-Hybrid method in daytime/thermal images that provides noise removal by preserving edges and structure in which results of median filtering and convolutional filtering are used as sorting-based.

### Prior Art

The importance of noise removal is increasing day by day due to the common use of sensors in real-time systems in recent years. Common causes of noise can be classified as noise caused by analog circuits, production errors, bit errors and insufficient photon amount when obtaining images from the sensor. AWGN (Additive White Gaussian Noise) is frequently encountered in real-time applications. This type of noise, mainly caused by analog circuits, is widely used in noise reduction research topics. Structural defects should not be caused while removing noise in images. Noise removal methods are the methods in which continuous research / development studies continue from past to present and that minimize the noise without the structural deterioration of the image.

Other noise types studied within the scope of noise reduction can be classified as IN (Impulse Noise/Salt & Pepper), QN (Quantisation noise), PN (Poisson Noise) and SN (Speckle Noise). AWGN is basically noise caused by analog circuits during image acquisition or image transmission. Other types of noise are caused by errors during production, bit errors during image acquisition, or insufficient photon number.

Noise removal methods in the prior art can cause structural distortions, especially in thermal images, while removing noise. It is important not to lose the structure as well as to protect the edges as much as possible and reduce the noise during noise removal.

The following problems are experienced in the state of the art;

- Excessive DSP consumption in real-time applications.
- Distortions and overlapping of details resulting from noise removal in thermal images, detail losses.
- High amount of memory used.
- Obtaining successful results depending on the noise types.

As a result of the research made in the prior art, document no KR100927458B1 is encountered. The application relates to a method of processing a filter in a spatial domain with a combination of alignment and averaging. It is used in the application to reduce effects such as distortion and overvaluation caused by DCT and quantization in video compression. Pixels are weighted in a certain area and elimination, alignment and averaging processes are performed. Said method primarily evaluates IN (impulse noise) based noise as a noise type, and it is alignment and average based. However, the use of sorting-based median filtering method and convolutional filters, which provide noise removal by preserving the edges and structure is not contained in the application.

The patent publication KR102214669B1 discloses using a combination of three median filters for performing image denoising.

The publication "High-Quality Image Scaling Using V-Model", Sudhakaran Anju et al., 2018 International Conference on Circuits and Systems in Digital Enterprise Technology, discloses applying a X-model filtering and a Plus-model filtering for image processing.

As a result, due to the abovementioned disadvantages and the insufficiency of the current solutions regarding the subject matter, a development is required to be made in the relevant technical field.

### Aim of the Invention

The invention aims to solve the abovementioned disadvantages by being inspired from the current conditions.

The main aim of the invention is to provide noise removal by preserving the edges and structure on the image. In addition to the ability to protect the edges while removing noise, noise removal can be performed without focusing on the edges.

The advantages of the inventive method are as follows;

- No DSP consumption in real-time application or keeping the same to a minimum.

- Removing noise, protecting details, preventing overlapping by preserving the structure in thermal images.

- Noise removal by preserving edges in images.

- Optimizing the image with X-Model/Plus-Model filters.

- Achieving successful results in most noise types.

- Low power consumption

- Low resource consumption

- Using low amount of memory.

- High operating frequency.

In order to fulfil the above aims, the present invention is a hybrid method applied to daytime or thermal images to provide noise removal, comprising the following process steps,

- taking daytime or thermal images,

- calculating the median value of all the pixels in a certain area of the input images, based on the central pixel, the median value of the 90° neighbourhoods and the median values of the 45°neighbourhoods,

- calculating X-Model and Plus-Model filtering in a certain area of input images,

- sorting the calculated results and taking the average according to the median value neighbourhoods,

- sorting using the calculated mean values and the center pixel,

- obtaining the output pixel by taking the average of the determined positions in the sorted result.

**Description of the Figures**

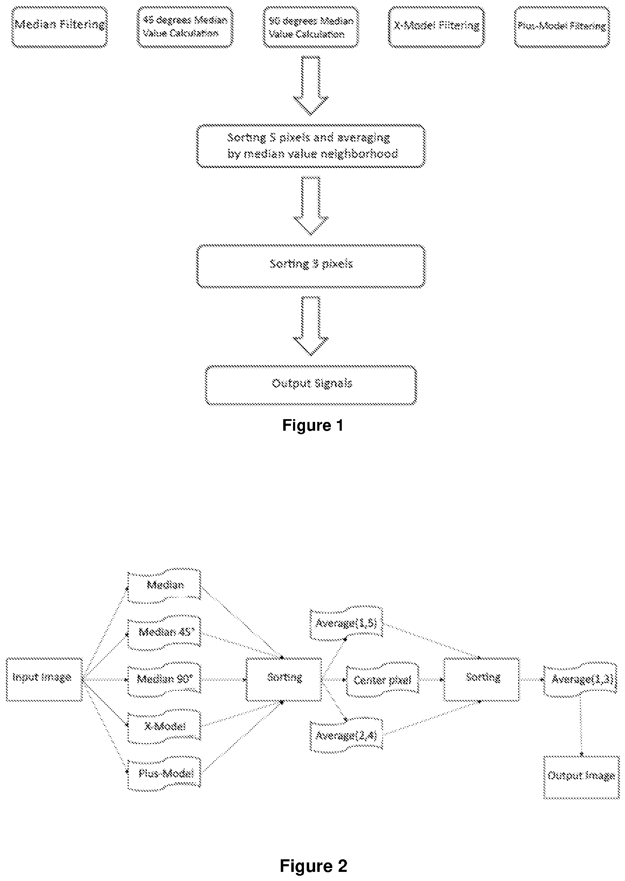

**Figure 1**　　is the flow chart of the inventive method.

**Figure 2**　　is a detailed flow chart of the inventive method.

**Figure 3**　　is a 5x5 median flow chart.

**Figure 4**　　is a 5x5 median 45°flow chart.

**Figure 5**　　is a 5x5 median 90°flow chart.

**Figure 6**　　is a 3x3 X-Model flow chart.

**Figure 7**　　is a 3x3 Plus-Model flow chart.

**Figure 8**　　is the view of the 5 pixels sorting.

**Figure 9**　　is the view of the center (median) pixel and average operations as a result of the sorting.

**Figure 10**　　is a view of the output pixel by 3 pixels sorting and averaging.

**Detailed Description of the Invention**

In this detailed description, the preferred embodiments of the invention are described only for clarifying the subject matter in a manner such that no limiting effect is created.

Median value results in different directions and X-Model/Plus-Model filter results are used in the inventive method. After applying operations such as sorting and averaging on the obtained results, the output is obtained. The method is implemented on FPGA in real time. In addition to the high operating frequency, low power consumption, low computational load, noise removal is provided by protecting the edges and without creating effects such as structural defects/overlapping, especially in thermal images. The superiority of the method has been revealed by comparing the same with the prior methods according to the noise types as a result of the experimental studies and analyses.

The X-Model/Plus-Model filter is roughly obtained by combining SSF (Sharpening Spatial Filter) and CF (Clamp Filter).

SSF is a type of high pass filter. It enhances the details in the image. It increases the center pixel density by using neighbouring pixels to increase the brightness in a specified area. It is used to increase the description between brightness and darkness in the present invention.

$$\text{SSF} = \begin{bmatrix} -1 & -1 & -1 \\ -1 & S & -1 \\ -1 & -1 & -1 \end{bmatrix}$$

CF (Clamp Filter) is a type of low pass filter. It is known as a convolutional filter, which removes the distortions and unwanted spaced edges in the image. It is seen in frequent use of the filter that the perimeter of the center pixel is completely surrounded by ones.

$$\text{CF} = \begin{bmatrix} 1 & 1 & 1 \\ 1 & C & 1 \\ 1 & 1 & 1 \end{bmatrix}$$

High resolution images are usually created using large convolutional filters. However, the increase in filter size increases the memory and thus the hardware cost. 3x3 filters have low computational complexity. Combined filters are the application of successively applied filters at once.

Obtaining the X-Model/Plus-Model filter:

1. As a result of the convolution of 3x3 SSF and 3x3 CF, a combined filter of 5x5 is obtained.

2. The 3x3 area of the 5x5 filter is cut from the position (2,2).

| -2-C+S | -4-C+S | -2-C+S |
|--------|--------|--------|
| -4-C+S | -8+SC | -4-C+S |
| -2-C+S | -4-C+S | -2-C+S |

3. If in the positions (1,2), (2,1), (2,3) and (3,2) of the 3x3 filter is called -4 - C + S = 0 to obtain the X-Model filter, the coefficients in these positions are reset and the C = S - 4 equality is obtained. If in the positions (1,1), (1,3), (3,1) and (3,3) of the 3x3 filter is called -2 - C + S = 0 to obtain the Plus-Model filter, the coefficients in these positions are reset and the C = S - 2 equality is obtained.

| -2-C+S |  | -2-C+S |
|---|---|---|
|  | -8+SC |  |
| -2-C+S |  | -2-C+S |

|  | -4-C+S |  |
|---|---|---|
| -4-C+S | -8+SC | -4-C+S |
|  | -4-C+S |  |

4. For X-Model, S-4 is written instead of C. For Plus-Model, S-2 is written instead of C. For both filters, a quadratic equation is obtained at position (2,2).

| 2 |  | 2 |
|---|---|---|
|  | $s^2-4s-8$ |  |
| 2 |  | 2 |

|  | - 2 |  |
|---|---|---|
| -2 | $s^2-2s-8$ | -2 |
|  | - 2 |  |

5. For the X-Model filter, the variable change in the $S^2 - 4S - 8 = -2HL$ equation is applied and necessary simplifications are made. For the Plus-Model filter, the variable change in the $S^2 - 2S - 8 = 2HL$ equation is applied and necessary simplifications are made. The state of the filters after **variable** substitution and simplifications is given below.

| -1 |  | -1 |
|---|---|---|
|  | HL |  |
| -1 |  | -1 |

|  | -1 |  |
|---|---|---|
| -1 | HL | -1 |
|  | -1 |  |

6. Finally, the combined filter becomes amplified by the gains of the SSF and CF filter since it is obtained by the convolution operation. In order to balance these gain values, the gain value is determined as (H-3)*(L+3).

X-Model/Plus-Model filters are as follows:

X-Model filter is as follows;

$$XF = \begin{bmatrix} -1 & & -1 \\ & H*L & \\ -1 & & -1 \end{bmatrix} / ((H\text{-}3)*(L\text{+}3)) =$$

$$\begin{bmatrix} -1/((H-3)*(L+3)) & & -1/((H-3)*(L+3)) \\ & H*L/((H-3)*(L+3)) & \\ -1/((H-3)*(L+3)) & & -1/((H-3)*(L+3)) \end{bmatrix}$$

Plus-Model filter is as follows;

$$PF = \begin{bmatrix} & -1 & -1 \\ -1 & H*L & -1 \\ & -1 & \end{bmatrix} / ((H\text{-}3)*(L\text{+}3)) =$$

$$\begin{bmatrix} & -1/((H-3)*(L+3)) & \\ -1/((H-3)*(L+3)) & H*L/((H-3)*(L+3)) & -1/((H-3)*(L+3)) \\ & -1/((H-3)*(L+3)) & \end{bmatrix}$$

H and L parameters are obtained by mathematical inferences after convolution of SSF and CF filters. In other words, H and L parameters are derived from S and C parameters. Finally, it is used to determine the characteristics of X-Model/Plus-Model filters.

While S and C parameters will be obtained as complex roots after integers greater than 6 in the X-Model filter in the increasing values of the H*L value as positive integers, on the other hand, this effect will be seen at values less than -4 in the decreasing values of the H*L value as negative integers in the Plus-Model filter. Namely, the reactions of the two filters in the same operating ranges are different from each other. In addition, while it is $S - C = 4$ in the acquisition of the X-Model filter, it is taken as $S - C = 2$ in the Plus-Model filter.

5x5 windowing was preferred for the modified hybrid median filtering method applied. Different approaches such as 3x3, 7x7 etc. can be used as well. Pixels and their positions obtained in 5x5 windowing;

$$M1 = \begin{bmatrix} (1,1) & (1,2) & (1,3) & (1,4) & (1,5) \\ (2,1) & (2,2) & (2,3) & (2,4) & (2,5) \\ (3,1) & (3,2) & (3,3) & (3,4) & (3,5) \\ (4,1) & (4,2) & (4,3) & (4,4) & (4,5) \\ (5,1) & (5,2) & (5,3) & (5,4) & (5,5) \end{bmatrix}$$

Diagram between neighbouring pixels used in hybrid median filter;

$$M2 = \begin{bmatrix} D & & V & & D \\ & D & V & D & \\ H & H & C & H & H \\ & D & V & D & \\ D & & V & & D \end{bmatrix}$$

'H' represents horizontal pixels and 'V' represents vertical pixels. The diagonal pixels represent 45 degree neighbourhoods, while the vertical and horizontal pixels represent 90 degree neighbourhoods.

The general flow definitions of the inventive method are as follows;

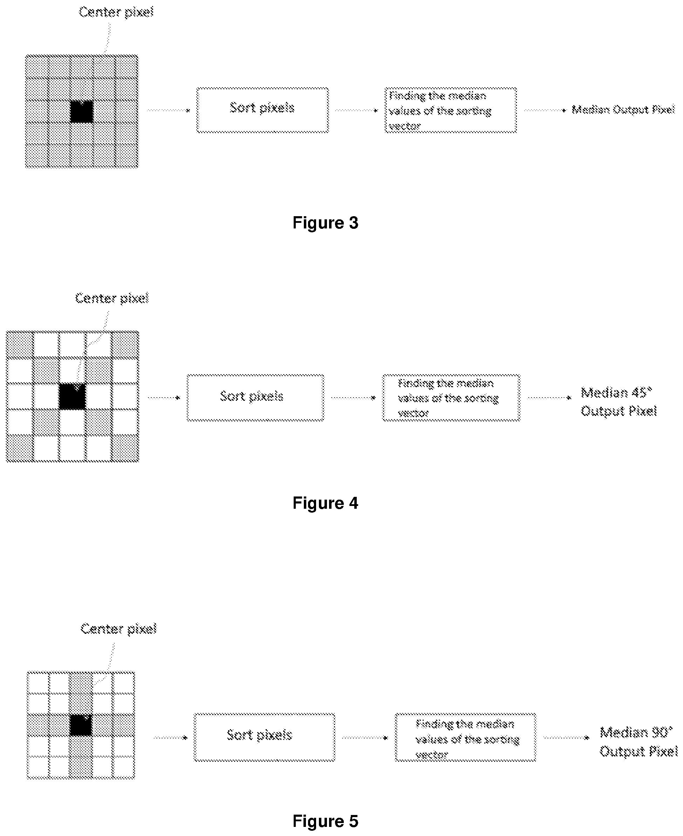

1. Median operations are applied for three conditions. The first is the classical median filtering (s1) in Figure 3, the second is the median (s2) of the 45 degree neighbourhoods in Figure 4, third one is the median of 90 degree neighbourhoods in Figure 5(s3).

$$s1 = median(M1).$$

$$s2 = median((1,1), (1,5), (2,2), (2,4), (3,3), (4,2), (4,4), (5,1), (5,5)).$$

$$s3 = median((1,3), (2,3), (3,1), (3,2), (3,3), (3,4), (3,5), (4,3), (5,3)).$$

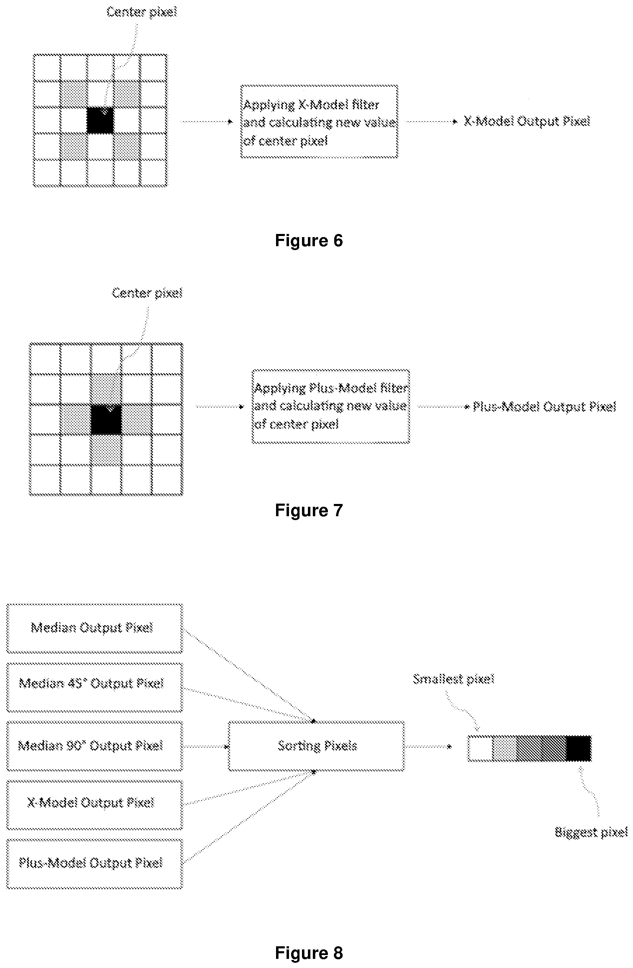

2. The 3x3 X-Model filtering in Figure 6 and the Plus-Model filtering process in Figure 7 are also applied over the same center pixel and two different values, s4 and s5, are obtained from there. The 5 different pixel values obtained are sorted from smallest to largest, as in Figure 8. (a = sort(s1,s2,s3,s4,s5))

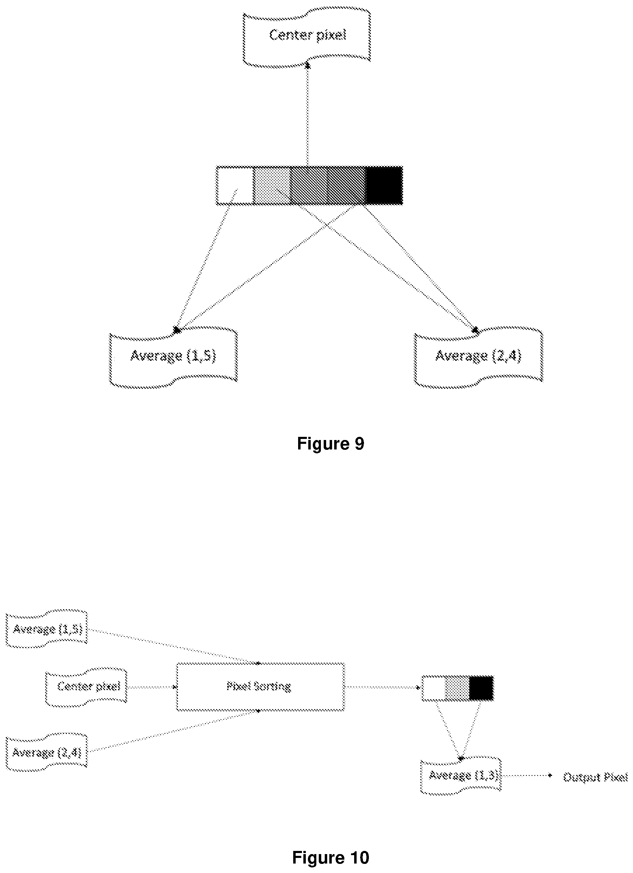

3. Let a vector elements be a1, a2, a3, a4 and a5, from smallest to largest. As in Figure 9, the average of the 1st and 5th elements and the 2nd and 4th elements is taken. Then, sorting is performed again from smallest to largest using the obtained values and the a3 value. (Other than the above mentioned elements, the process can be continued by taking the average.)

4. Let's call the vector obtained as a result of sorting the vector b. Let the vector elements be b1, b2 and b3. As in Figure 10, the average of b1 and b3 is taken and output as the output pixel. (It is not necessary to take the average of b1 and b3. In this step, necessary analyses can be made and different approaches can be applied.)
If the inventive method is to be detailed;

Let's define the noise-free image as $GSG = \begin{bmatrix} (1,1) & (1,2) & (1,3) & (1,4) & (1,5) \\ (2,1) & (2,2) & (2,3) & (2,4) & (2,5) \\ (3,1) & (3,2) & (3,3) & (3,4) & (3,5) \\ (4,1) & (4,2) & (4,3) & (4,4) & (4,5) \\ (5,1) & (5,2) & (5,3) & (5,4) & (5,5) \end{bmatrix}$,

Let' define the noisy image as $GLG = \begin{bmatrix} (1,1)' & (1,2)' & (1,3)' & (1,4)' & (1.5)' \\ (2,1)' & (2,2)' & (2,3)' & (2.4)' & (2,5)' \\ (3,1)' & (3,2)' & (3,3)' & (3,4)' & (3,5)' \\ (4,1)' & (4,2)' & (4,3)' & (4,4)' & (4,5)' \\ (5,1)' & (5,2)' & (5,3)' & (5,4)' & (5,5)' \end{bmatrix}$

It should be $(3,3) \cong (3,3)'$ after the noise removal applied on the noisy image. Let the value obtained from the 5x5 median result in figure 3 be m1, Let the median value found from 45° neighbourhoods in Figure 4 be m2, Let the median value found from 90° neighbourhoods in Figure 5 be m3. Namely;

$$m1 = median\ (GLG).$$

$$m2 = median\ (GLG\ (1,1), GLG\ (1,5), GLG\ (2,2), GLG\ (2,4), GLG\ (3,3), GLG\ (4,2), GLG\ (4,4), GLG\ (5,1), GLG\ (5,5)).$$

$$m3 = median\ (GLG\ (1,3), GLG\ (2,3), GLG\ (3,1), GLG\ (3,2), GLG\ (3,3), GLG\ (3,4), GLG\ (3,5), GLG\ (4,3), GLG\ (5,3)).$$

Different conditions occur when the median of three different values obtained as in Figure 3, Figure 4 and Figure 5 and/or when the values are considered one by one.

1. The median of the m1, m2, m3 values is less than the desired (3,3) value (median(m1, m2, m3) < (3,3)).

2. The median of the m1, m2, m3 values is very close to the desired (3,3) value (median(m1, m2, m3) $\cong$ (3,3)).

3. The median of m1, m2, m3 values is greater than the desired (3,3) value (median(m1, m2, m3) > (3,3)).

4. The largest of the m1, m2, m3 values is less than the desired (3,3) value (maximum(m1, m2, m3) < (3,3)).

5. The largest of the m1, m2, m3 values is very close to the desired (3,3) value (maximum(m1, m2, m3) ≅ (3,3)).

6. The largest of the m1, m2, m3 values is greater than the desired (3,3) value (maximum(m1, m2, m3) > (3,3)).

7. The smallest of the m1, m2, m3 values is less than the desired (3,3) value (minimum(m1, m2, m3) < (3,3)). In this case, sub-conditions will occur. In other words, values other than the smallest value can be smaller or larger than (3,3).

8. The smallest of the m1, m2, m3 values is very close to the desired (3,3) value (minimum(m1, m2, m3) ≅ (3,3)). In this case, sub-conditions will occur. In other words, values other than the smallest value can be smaller or larger than (3,3).

9. The smallest of the m1, m2, m3 values is greater than the desired (3,3) value (minimum(m1, m2, m3) > (3,3)).

If the first condition is considered, it means that a value smaller than the actual value to be obtained will be output. In such cases, a smoothing effect is observed in the images. The smoothing effect can cause overlapping of images as well as loss of edge information. The X-Model/Plus-Model results are used to eliminate all possible effects of the conditions. X-Model/Plus-Model filtering process has adjustable coefficients. These results are adjusted for effects, thus provides maximum convergence to the noise-free image.

Let the X-Model/Plus-Model results obtained as in Figure 6 and Figure 7 be x1 and p1, respectively. x1, p1>median(m1,m2,m3) should be for the first condition. Filter coefficients should be chosen to meet this condition. Here it can be

$$x1>maximum(m1,m2,m3),p1>maximum(m1,m2,m3);$$

$$x1<maximum(m1,m2,m3),p1>maximum(m1,m2,m3);$$

$$x1<maximum(m1,m2,m3),p1<maximum(m1,m2,m3)$$

or

$$x1>maximum(m1,m2,m3),p1<maximum(m1,m2,m3).$$

When the 5 pixel values available in total are ordered from smallest to largest as in Figure 8, vector S5 is obtained as S5 = [a, b, c, d, e]. Here, the median value 'c' should converge to the desired (3,3) value and x1 and p1 values should help value 'c' to converge this value. To increase the precision, as represented in Figure 9, $\frac{a+2}{2}$ , $\frac{b+d}{2}$ and c values are taken and sorted from smallest to largest. Let be the newly obtained vector S3 S3 = [f g h] as shown in Figure 10. The average of the 1st and 3rd elements of the S3 vector is output pixel. So, it is considered as $\frac{f+h}{2} \cong (3,3)$ . The implications of this acceptance are as follows:

a) If it is g = c then it will be $\frac{f+h}{2} = \frac{a+b+d+e}{4}$ . So $\frac{a+b+d+e}{4} \cong (3,3) > c$ is obtained. There will be $\frac{a+b}{2} < c$ in the vector S5, ordered from smallest to largest. In this case, it should be $\frac{d+e}{2} > c$ to converge to the desired value. In addition, the value of $\frac{d+e}{2}$ must ensure that the mean of the four elements is greater than 'c' and that it is the value at which the maximum convergence to (3,3) is obtained. In other words, it can be figured out that the pixel results from the X-Model and Plus-Model filters are greater than the median results from the convergence of the mean of the four elements other than the median value of the S5 vector to the value (3,3).

b) If it is $g = \frac{a+e}{2}$ then it will be $\frac{f+h}{2} = \frac{b+d+2c}{4}$ . It is known that a < b < c < d < e is precisely in the vector S5. It should also be noted that there is a < b < c < (3,3). In this case, when $\frac{b+d+2c}{4}$ is considered, the value of 'd' provides b < c < d equality and $\frac{b+d+2c}{4} \cong (3,3)$ convergence. The convergence of the value obtained using the median value of the S5 vector and its two closest neighbours to the value of (3,3) requires that the pixel results from the X-Model and Plus-Model filters be greater than the median results.

c) If it is $g = \frac{b+d}{2}$, then it will be $\frac{f+h}{2} = \frac{a+e+2c}{4}$. It is known that a < b < c < d < e is precisely in the vector S5. In this case, when $\frac{a+e+2c}{4}$ is considered, the value of 'e' provides a < c < e equality and $\frac{a+e+2c}{4} \cong (3,3)$ convergence. It is known that f < g < h is in the vector S3. It is not possible to deduce h= c from the conditions. Because if such a condition occurs, it will diverge to (3,3). The convergence of the value obtained using the median value of the S5 vector and its two neighbours to the value of (3,3) requires that the pixel results from the X-Model and Plus-Model filters be greater than the median results (The same can be valid for condition 4 and condition 5).

It has been shown that the values from the X-Model/Plus-Model filters should be greater than the median results considering all possibilities for the relevant condition. It is possible to converge noisy pixels to the original pixels using the X-Model/Plus-Model filters.

The flow of the design on the FPGA is as follows:

1. The incoming video image is taken with the control block. The received image is sent to the Fifo controller.

2. The Fifo controller is responsible for the task of writing and reading video lines.

3. The lines are read from the Fifos with the incoming third video line.

4. Mirroring is performed in the image by using the registers suitable for the video data width together with the incoming lines. This operation is used in the boundary conditions (corners and edges) of the video frame. X-Model/Plus-Model calculators and median calculators calculate on all pixels along the active area of the video frame and sends the calculation results to the sorting blocks.

5. After the sorting and averaging operations are performed, the calculations are sent to the output controller along with the synchronous video signals.

6. The output controller synchronously transmits the video frame signals from the sorting blocks and average calculators. The calculations can be made or the incoming video can be output without being calculated with the bypass signal control in the output controller.

| Image Quality Evaluation Metrics | PSNR | SSIM | RMSE |
|---|---|---|---|
| Median filter output (c) | 26.28dB | 0.7946 | 12.3714 |
| Type1 modified hybrid median filter output (d) | 26.32dB | 0.7977 | 12.3095 |
| Type2 modified hybrid median filter output (e) | 27.79dB | 0.8400 | 10.4012 |
| ES-Hybrid (f) | 36.03dB | 0.9464 | 4.0262 |

In experimental studies, the results were evaluated using PSNR (Peak Signal-To-Noise Ratio), RMSE (Root Mean Square Error) and SSIM (Structural Similarity Index for measuring image quality) image quality metrics. "Salt & pepper" noise was applied to the daytime image and the results of the study performed in the noisy image are evaluated in Table 1.

Table 1

"Salt & pepper" noise was applied to the thermal image and the results of the studies performed on the noisy image are evaluated in Table 2 below.

Table 2

| Image Quality Evaluation Metrics | PSNR | SSIM | RMSE |
|---|---|---|---|
| Median filter output (c) | 31.44dB | 0.8576 | 6.8281 |

(continued)

| Image Quality Evaluation Metrics | PSNR | SSIM | RMSE |
|---|---|---|---|
| Type1 modified hybrid median filter output (d) | 31.51dB | 0.8595 | 6.7759 |
| Type2 modified hybrid median filter output (e) | 32.94dB | 0.8872 | 5.7438 |
| ES-Hybrid (f) | 39.67dB | 0.9532 | 2.6479 |

Gaussian noise was applied to the thermal image with a variance value of 10, and then the results of the studies performed on the noisy image are shared in Table 3.

Table 3

| Image Quality Evaluation Metrics (variance=10) | PSNR | SSIM | RMSE |
|---|---|---|---|
| Wiener Filter | 37.36dB | 0.9021 | 2.7551 |
| Bilateral Filter | 39.32dB | 0.9353 | 3.1800 |
| Gaussian Filter | 33.28dB | 0.8663 | 5.5257 |
| Guided Filter | 35.73dB | 0.8918 | 4.1674 |
| Bitonic Filter | 34.32dB | 0.8775 | 4.9004 |
| Anisotropic Diffusion Filter | 38.06dB | 0.9132 | 3.1851 |
| Median Filter | 31.42dB | 0.8545 | 6.8423 |
| Type 1 Modified Median Filter | 31.57dB | 0.8557 | 6.8072 |
| Type 2 Modified Median Filter | 32.83dB | 0.8816 | 5.8155 |
| Wavelet Filter | 38.16dB | 0.9195 | 3.1485 |
| ES-Hybrid | 39.52dB | 0.9471 | 2.7068 |

Gaussian noise was applied to the thermal image with a variance value of 20, and then the results of the studies performed on the noisy image are shared in Table 4.

Table 4

| Image Quality Evaluation Metrics/ Different Methods (variance=20) | PSNR | SSIM | RMSE |
|---|---|---|---|
| Wiener Filter | 37.04dB | 0.8992 | 3.5846 |
| Bilateral Filter | 36.83dB | 0.8919 | 3.6720 |
| Gaussian Filter | 33.25dB | 0.8660 | 5.5461 |
| Guided Filter | 35.67dB | 0.8909 | 4.1967 |
| Bitonic Filter | 34.31dB | 0.8438 | 4.4820 |
| Anisotropic Diffusion Filter | 35.10dB | 0.8451 | 4.4684 |
| Median Filter | 31.38dB | 0.8505 | 6.8742 |
| Type 1 Modified Median Filter | 31.42dB | 0.8507 | 6.8419 |
| Type 2 Modified Median Filter | 32.74dB | 0.8759 | 5.8798 |
| Wavelet Filter | 37.32dB | 0.9094 | 3.4717 |
| ES-Hybrid | 38.32dB | 0.9283 | 3.0926 |

Gaussian noise was applied to the thermal image with a variance value of 30, and then the results of the studies performed on the noisy image are shared in Table 5.

Table 5

| Image Quality Evaluation Metrics/ Different Methods (variance=30) | PSNR | SSIM | RMSE |
|---|---|---|---|
| Wiener Filter | 36.72dB | 0.8957 | 3.7196 |
| Bilateral Filter | 35.27dB | 0.8536 | 4.3955 |
| Gaussian Filter | 33.21dB | 0.8646 | 5.5706 |
| Guided Filter | 35.62dB | 0.8904 | 4.2191 |
| Bitonic Filter | 34.19dB | 0.8741 | 4.9751 |
| Anisotropic Diffusion Filter | 33.32dB | 0.7845 | 5.5012 |
| Median Filter | 31.34dB | 0.8479 | 6.9034 |
| Type 1 Modified Median Filter | 31.36dB | 0.8473 | 6.8944 |
| Type 2 Modified Median Filter | 32.59dB | 0.8692 | 5.9845 |
| Wavelet Filter | 36.61dB | 0.9000 | 3.7196 |
| ES-Hybrid | 37.36dB | 0.9109 | 3.4559 |

"Poisson" noise was applied to the thermal image, and then the results of the studies performed on the noisy image are shared in Table 6.

Table 6

| Image Quality Evaluation Metrics/ Different Methods ("poisson" noise) | PSNR | SSIM | RMSE |
|---|---|---|---|
| Wiener Filter | 34.95dB | 0.8706 | 4.5599 |
| Bilateral Filter | 29.12dB | 0.6316 | 8.9165 |
| Gaussian Filter | 33.01dB | 0.8598 | 5.7021 |
| Guided Filter | 35.33dB | 0.8866 | 4.3635 |
| Bitonic Filter | 33.84dB | 0.8661 | 5.1774 |
| Anisotropic Diffusion Filter | 28.39dB | 0.5835 | 9.6990 |
| Median Filter | 31.00dB | 0.8269 | 7.1818 |
| Type 1 Modified Median Filter | 30.98dB | 0.8233 | 7.1973 |
| Type 2 Modified Median Filter | 31.99dB | 0.8373 | 6.4068 |
| Wavelet Filter | 34.24dB | 0.8525 | 4.9447 |
| ES-Hybrid | 34.07dB | 0.8284 | 5.0471 |

"Poisson" noise was applied to the daytime image, and then the results of the studies performed on the noisy image are shared in Table 7.

Table 7

| Image Quality Evaluation Metrics/ Different Methods ("poisson" noise) | PSNR | SSIM | RMSE |
|---|---|---|---|
| Wiener Filter | 32.32dB | 0.8540 | 6.1686 |
| Bilateral Filter | 31.15dB | 0.7694 | 7.0602 |
| Gaussian Filter | 28.28dB | 0.8073 | 9.8228 |
| Guided Filter | 27.68dB | 0.5852 | 11.1713 |
| Bitonic Filter | 29.47dB | 0.8221 | 8.5672 |
| Anisotropic Diffusion Filter | 27.17dB | 0.5850 | 11.1685 |
| Median Filter | 26.16dB | 0.7630 | 12.5363 |

(continued)

| Image Quality Evaluation Metrics/ Different Methods ("poisson" noise) | PSNR | SSIM | RMSE |
|---|---|---|---|
| Type 1 Modified Median Filter | 26.17dB | 0.7597 | 12.2197 |
| Type 2 Modified Median Filter | 27.37dB | 0.7843 | 10.9083 |
| Wavelet Filter | 32.16dB | 0.8535 | 6.2845 |
| ES-Hybrid | 31.83dB | 0.8051 | 6.5334 |

**Claims**

1. A hybrid method applied to daytime or thermal images to provide noise removal, comprising the following process steps;

   • taking daytime or thermal images,
   • calculating the median value of all the pixels in a certain area of the input images including a central pixel; calculating, in said certain area, the median value of pixels on horizontal and vertical axis neighbouring said central pixel, and including said central pixel; and calculating, in said certain area, the median value of pixels on diagonal directions neighbouring said central pixel, and including said central pixel,

   **characterised by** comprising the steps;

   • calculating the result of a X-Model filtering and the result of a Plus-Model filtering applied in said certain area of input images, wherein the X-model and the Plus-Model are obtained by combining a sharpening spatial filter and a clamp filter through convolution, wherein, for the X-model, the coefficients that are not on a diagonal axis of the filter are set to 0, and, for the Plus-Model, the coefficients that are not on the central horizontal axis or the central vertical axis of the filter are set to 0,
   • sorting the five values consisting of the three median values, the result of the X-model filtering and the result of the Plus-Model filtering; calculating the average of the 1st and 5th elements and calculating the average of the 2nd and 4th elements,
   • sorting the three values consisting of the two calculated averages and the central pixel value,
   • obtaining the output pixel by taking the average of the first and last values in the sorted result.

2. The hybrid method according to claim 1, **characterized in that**; X-Model/Plus-Model filtering process has adjustable coefficients to eliminate all possible effects of the conditions, such as overlapping of images as well as loss of edge information which are caused by the smoothing effect which is observed in the images in cases such as output is obtained as a smaller value than the actual value.

**Patentansprüche**

1. Hybridverfahren, das auf Tag- oder Thermalbilder angewendet wird, um für Rauschentfernung zu sorgen, umfassend die folgenden Prozessschritte;

   • Aufnehmen von Tag- oder Thermalbildern,
   • Berechnen des Medianwerts sämtlicher Pixel in einem gewissen Bereich der Eingabebilder, einschließlich eines zentralen Pixels; Berechnen, in dem gewissen Bereich, des Medianwerts von Pixeln auf der horizontalen und vertikalen Achse, die dem zentralen Pixel benachbart sind, und einschließlich des zentralen Pixels; und Berechnen, in dem gewissen Bereich, des Medianwerts von Pixeln in diagonalen Richtungen, die dem zentralen Pixel benachbart sind, und einschließlich des zentralen Pixels,

   **dadurch gekennzeichnet, dass** es die folgenden Schritte umfasst;

   • Berechnen des Ergebnisses einer X-Modell-Filterung und des Ergebnisses einer Plus-Modell-Filterung, die in dem gewissen Bereich der Eingabebilder angewendet werden, wobei das X-Modell und das Plus-Modell durch Kombinieren eines schärfenden Raumfilters und eines Klemmfilters durch Faltung erhalten werden, wobei, bei dem X-Modell, die Koeffizienten, die nicht auf einer diagonalen Achse des Filters liegen, auf 0 gesetzt werden und, bei dem Plus-Modell, die Koeffizienten, die nicht auf der zentralen horizontalen Achse oder der zentralen vertikalen Achse des Filters liegen, auf 0 gesetzt werden,
• Sortieren der fünf Werte, bestehend aus den drei Medianwerten, dem Ergebnis der X-Modell-Filterung und dem Ergebnis der Plus-Modell-Filterung; Berechnen des Durchschnitts des 1. und 5. Elements und Berechnen des Durchschnitts des 2. und 4. Elements,
• Sortieren der drei Werte, bestehend aus den zwei berechneten Durchschnitten und dem zentralen Pixelwert,
• Erhalten des Ausgabepixels durch Nehmen des Durchschnitts des ersten und letzten Werts in dem sortierten Ergebnis.

2.  Hybridverfahren nach Anspruch 1, **dadurch gekennzeichnet, dass**; ein X-Modell-/Plus-Modell-Filterungsprozess einstellbare Koeffizienten aufweist, um alle möglichen Wirkungen der Bedingungen zu eliminieren, wie z. B. Überlappung von Bildern sowie Verlust von Kanteninformationen, die von dem Glättungseffekt verursacht werden, der in den Bildern in Fällen beobachtet wird, in denen die Ausgabe als ein kleinerer Wert als der Istwert erhalten wird.


**Revendications**

1.  Procédé hybride appliqué à des images diurnes ou thermiques pour assurer l'élimination du bruit, comprenant les étapes de traitement suivantes ;

    • la prise d'images diurnes ou thermiques,
    • le calcul de la valeur médiane de tous les pixels dans une certaine zone des images d'entrée comprenant un pixel central ; le calcul, dans ladite certaine zone, de la valeur médiane des pixels sur l'axe horizontal et l'axe vertical voisin dudit pixel central, et comprenant ledit pixel central ; et le calcul, dans ladite certaine zone, de la valeur médiane des pixels sur les directions diagonales voisines dudit pixel central, et comprenant ledit pixel central,

    caractérisé en comprenant les étapes ;

    • calcul du résultat d'un filtrage de modèle X et du résultat d'un filtrage de modèle Plus appliqués dans ladite certaine zone d'images d'entrée, ledit modèle X et le modèle Plus étant obtenus en combinant un filtre spatial d'affinage et un filtre anti-repliement par convolution, pour le modèle X, lesdits coefficients qui ne sont pas sur un axe diagonal du filtre étant fixés à 0, et, pour le modèle Plus, lesdits coefficients qui ne sont pas sur l'axe horizontal central ou l'axe vertical central du filtre étant fixés à 0,
    • triage des cinq valeurs constituées des trois valeurs médianes, du résultat du filtrage du modèle X et du résultat du filtrage du modèle Plus ; calcul de la moyenne des 1er et 5e éléments et calcul de la moyenne des 2e et 4e éléments,
    • triage des trois valeurs constituées des deux moyennes calculées et de la valeur centrale de pixel,
    • obtention du pixel de sortie en faisant la moyenne des première et dernière valeurs dans le résultat trié.

2.  Procédé hybride selon la revendication 1, **caractérisé en ce que** ; le processus de filtrage de modèle X/modèle Plus possède des coefficients réglables pour éliminer tous les effets possibles des conditions, tels que le chevauchement d'images ainsi que la perte d'informations de bord qui sont causés par l'effet de lissage qui est observé dans les images dans des cas tels que la sortie est obtenue comme une valeur plus petite que la valeur réelle.

**Figure 1**

**Figure 2**

Center pixel

Sort pixels → Finding the median values of the sorting vector ⋯→ Median Output Pixel

**Figure 3**

Center pixel

Sort pixels ⋯→ Finding the median values of the sorting vector ⋯→ Median 45° Output Pixel

**Figure 4**

Center pixel

Sort pixels → Finding the median values of the sorting vector ⋯→ Median 90° Output Pixel

**Figure 5**

**Figure 6**

**Figure 7**

**Figure 8**

**Figure 9**

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100927458 B1

- KR 102214669 B1

**Non-patent literature cited in the description**

- **SUDHAKARAN ANJU et al.** High-Quality Image Scaling Using V-Model. *2018 International Conference on Circuits and Systems in Digital Enterprise Technology*